# EUROPÄISCHE PATENTSCHRIFT

(11) **EP 3 035 076 B1**
(45) Veröffentlichungstag und Bekanntmachung des Hinweises auf die Patenterteilung: **19.08.2020**
(21) Anmeldenummer: 14198460.9
(22) Anmeldetag: 17.12.2014
(51) Int. Cl.: G01S 7/481, G01S 17/42, G01C 15/00, H02K 21/24, H02K 29/10, H02K 5/167, H02K 1/27

(54) **Vermessungsgerät mit Positioniereinrichtung**
Measuring device with positioning device
Dispositif de mesure doté d'un dispositif de positionnement

(43) Veröffentlichungstag der Anmeldung: 22.06.2016
(73) Patentinhaber: Leica Geosystems AG, 9435 Heerbrugg (CH)
(72) Erfinder: Faix, Oliver, 9444 Diepoldsau (CH); Herbst, Christoph, 6850 Dornbirn (AT); Auer, Daniel, 9000 St. Gallen (CH); Mueller, Josef, 9413 Oberegg (CH)
(74) Vertreter: Kaminski Harmann

(56) Entgegenhaltungen:
- EP-A1- 0 624 945
- EP-A1- 1 619 468
- EP-A2- 2 105 706
- WO-A1-01/06620
- DE-U1-202007 017 856
- US-A1- 2009 052 288
- US-A1- 2009 067 461
- Anonymous: "Brushless DC electric motor - Wikipedia, the free encyclopedia", , 6. Januar 2014 (2014-01-06), XP055162563, Gefunden im Internet: URL:https://web.archive.org/web/2014010611 0311/http://en.wikipedia.org/wiki/Brushles s_DC_electric_motor [gefunden am 2015-01-15]

## Beschreibung

Die vorliegende Erfindung betrifft die Oberbegriffe der unabhängigen Ansprüche. Damit befasst sich die Erfindung allgemein mit Vermessungsgeräten ausgebildet als Totalstation, Tracker oder Theodolit.

In vielen Vermessungsgeräten ist die Modifizierung von gerichteter optischer Messstrahlung, z.B. durch Ausrichtung von den Strahlgang integrierenden Komponenten oder eine Fokussierung auf ein Ziel, erforderlich. Dabei muss diese Modifizierung präzise und bei dynamischen Anwendungen auch hinreichend schnell erfolgen, so dass beispielsweise grosse zu bewegende Massen nachteilig sind. Zudem erfordert die Feldtauglichkeit des Messgerätes grundsätzlich Robustheit des Antriebs sowie einen geringen Energiebedarf.

Ein industrielles oder geodätisches Vermessungsgerät weist in der Regel eine Stehachse und eine Kippachse auf, welche gelagert sind und angetrieben werden. Beispiele für solche Messgeräte sind Totalstationen, Theodoliten oder Tachymeter, welche - auch zusammen mit integrierten automatischen Zielerfassungs- und Zielverfolgungs-Einrichtungen - für vielfältige Vermessungsaufgaben zum Einsatz kommen, wobei sowohl eine Datengewinnung als auch eine reine Überprüfung, wie z.B. in der Bauwerksüberwachung, in Frage kommen. Andere Messgeräte sind beispielsweise Systeme wie Lasertracker, Laserscanner oder Profiler, die im abtastenden Verfahren Topographien von Oberflächen als dreidimensionale Punktwolken aufnehmen. In bisherigen Lösungen kommen für diese Zwecke häufig Servomotoren zum Einsatz, die den Antrieb der Komponenten darstellen. Servomotoren mit einem nachgelagerten Getriebe sind komplex, teuer, wartungsintensiv und verschleissanfällig. Kombinationen von Elektromotoren und Getrieben sind zudem nicht in der Lage hohe Achsgeschwindigkeiten, wie sie zum Scannen benötigt werden, mit genauer und langsamer Feinanzielung bzw. einer Positionierung zu verbinden, da in der Regel der nutzbare Drehzahlbereich der Motoren oder Getriebe hierfür nicht gross genug ist.

Für minimale Verstellwege können hingegen alternative Antriebselemente, wie z.B. elektrostatische Kämme, verwendet werden. Aus der US 7,999,921, der EP1619468 und der

EP 1 314 960 sind z.B. geodätische Messgeräte bekannt, in denen Piezoelemente zur Bewegung einer Strahlungsquelle im Gehäuse des Messgeräts verwendet werden. Allerdings ist der verfügbare Bewegungsspielraum durch die Deformation des Piezoelementes beschränkt. Insbesondere eine fortlaufende und unbeschränkte Bewegung als Endlostrieb, wie sie z.B. für eine Rotation benötigt wird, ist durch einen Piezo-Aktuator bzw. ein Piezostellelement oder elektrostatische Vorrichtungen nicht realisierbar. Piezoantriebe basieren auf dem Prinzip des Reibschlusses und sind daher verschleissbehaftet. Stellenweise können auch Prinzip bedingt Geräusche entstehen. Piezoantriebe sind überdies hinaus für hohe Drehzahlen ungeeignet. Für das Scannen von Objekten ist es oft vorteilhaft, wenn der Messstrahl oszillierend bewegt wird. Diese Anwendung ist wegen des Verschleisses nicht dauerhaft möglich.

US 2009/067461 A1 zeigt einen Laserrotator, der, insbesondere zur Eliminierung von Lagerspiel, mit einem Leiterplattenstator und einem mit Magneten bestückten Rotor ausgestattet ist, wobei das Pentaprisma des Rotators mit dem Rotor verbunden ist.

DE 20 2007 017 856 U1 zeigt einen Servomotor, dessen Schaltungsträger Teil des Stators ist und wobei auch eine mit Dauermagneten eines Rotors zusammenwirkende Motorspulen auf dem Schaltungsträger vorgesehen sind.

EP 0 624 945 A1 zeigt einen Motor mit einem dauermagnetischen Rotor und einem elektromagnetischen Stator, wobei der Stator ebenfalls durch auf einer Trägerplatte angebrachte Wicklungen realisiert ist.

Bürstenlose Gleichstrommotoren sind generell im Stand der Technik bekannt, dies etwa aus Wikipedia.

Asynchronantriebe sind zwar bei kontinuierlichen, fortwährenden, gleichförmigen Bewegungen gern genutzte Lösungen, können aber für Positionieraufgaben in Vermessungsinstrumenten nicht verwendet werden, da die statische Regelung von Asynchronmotoren nahezu unmöglich ist.

Synchronmotoren wären in radialer Bauform für Vermessungsgeräte geeignet, sind jedoch bauformbedingt mit Rastmomenten behaftet. Ein in einem Laserscanner verbauter bürstenloser Synchronmotor ist in der US 2009/0052288 A1 gezeigt. Bei unbestromter Wicklung richten sich die Magnete des Rotors also gegenüber dem Statorblech aus, wodurch sich die Achse von der Sollposition wegbewegt. Eine permanente Regelung bzw. Bestromung ist notwendig, um solche Antriebe auf Position zu halten. Für Vermessungsgeräte wie Totalstationen ist eine präzise langsame Bewegung notwendig, um das Teleskop auf ein Ziel ausrichten zu können. Diese gleichmässige Bewegung ist durch das Rastmoment nur schwer erreichbar. Oft ist es erwünscht einen möglichst grossen freien Innendurchmesser des Rotors zu haben, um den Raum für die Durchführung von optischen Strahlen und/oder Kabeln zu nutzen. Funktionsbedingt steigt jedoch bei diesem Motortyp dann aber auch der Aussendurchmesser sehr stark an, wodurch der Motor völlig überdimensioniert sein kann. Zudem generieren Synchronmotoren in radialer Bauform toleranzbedingt eine radiale, statische Kraft, die bei Präzisionsgleitlagern unzulässig ist.

Aufgabe der Erfindung ist die Bereitstellung eines verbesserten Vermessungsgerätes mit Positioniereinrichtung, die die oben beschriebenen Nachteile vermeidet.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung beruht darauf, das Vermessungsgerät so auszubilden, dass eine Verwendung eines Axialflussmotors als Positioniereinrichtung möglich ist und dabei auf zusätzliche Kraftübertragungselemente, wie Kupplungen oder Getriebe, verzichtet werden kann. Mittels einer Steuer- und Auswerteeinheit ist der Axialflussmotor so ansteuerbar, dass die Vortriebskräfte des Axialflussmotors frei konfigurierbar sind. Im Speziellen können hierfür bekannte Ansteuertechnologien wie Spannungs-, Frequenz- und/oder Phasendifferenzkontrolle angewendet werden.

Der erfindungsgemässe Einsatz von Axialflussmotoren als Positioniereinrichtung erlaubt die Verwendung als skalierbares Achs-Positioniersystem für die Bewegung und Positionierung der Strahllenkeinheit des Messgerätes. Es kann bei jeweiliger Verbauung der Positioniereinrichtung eine Bewegung um die Kippachse und um die Stehachse des Messgerätes bewirkt werden, um einen zur Messung verwendeten Strahlgang, z.B. durch eine Ausrichtung bzw. Änderung der Ausrichtung, zu modifizieren.

Ein Axialflussmotor besteht aus einem Rotor und einem Stator, die magnetisch miteinander in Wechselwirkung treten. Der Rotor weist mehrere umfänglich an einer Rotorscheibe fixierte Permanentmagnete und der Stator mehrere, den Permanentmagneten axial gegenüberliegende Spulen auf. Diese Korrelation (Rotor:Permanentmagnete, Stator:Spulen) ist nicht zwingend erforderlich, jedoch technisch geeigneter als eine entsprechend umgekehrte Korrelation. Die Spulen müssen nämlich mit der Steuer- und Auswerteeinheit verkabelt werden, durch welche sie elektrisch so angeregt werden, dass mit den daraus resultierenden elektro-magnetischen Feldern der Spulen die Permanentmagnete zum Rotieren gebracht werden. Axialflussantriebe der beschriebenen Art lassen sich mit vergleichsweise wenigen Komponenten realisieren und mit weitgehend automatisierten Fertigungstechnologien kostengünstig herstellen. Insbesondere das Ein- bzw. Aufgiessen der Spulen in bzw. auf die Platine zu spiralförmigen Leiterbahnen ist ein rationelles Herstellungsverfahren, das einen sehr flachen Aufbau ermöglicht. Dies impliziert ebenfalls das Einlassen eines diskreten Leiters in die Leiterplatte sowie ein Aufdrucken im Multilayerverfahren.

Da die Kraftübertragung berührungsfrei und stattfindet, ist die Positioniereinrichtung sehr reibungs- und geräuscharm. Dadurch verfügt die Positioniereinrichtung über eine sehr hohe Dynamik und auch die Fähigkeit, kleine wie hohe Drehzahlen zu erreichen. Die Spulen sind bevorzugt ohne prägnante Eisenkerne ausgeführt, weshalb an keiner Position ein Rastmoment herrscht. Vielmehr sind die Spulen zur Effektivitätssteigerung mit einer gleichmässigen Flussumlenkung hinterlegt, die also keine Rastpositionen zulässt.

Bei Bremsvorgängen, wie sie im oszillierenden Betrieb des Vermessungsgerätes üblicherweise vorkommen, kann der Antrieb gar als Generator wirken und Energie zurückgewinnen, was insbesondere bei Batteriebetrieb die Mobilität des Vermessungsgerätes steigert.

Trotz dem, dass die Kraftübertragung berührungslos, weil elektro-magnetisch, erfolgt, lässt sich mit der erfindungsgemässen Positioniereinrichtung eine Rutschkupplung realisieren, die man sonst nur von an einander abreibenden Komponenten kennt. Dazu wird bei entsprechender Ansteuerung der Spulen ein Widerstandsmoment erzeugt, wobei eine Verdrehung von Stator und Rotor aber zugelassen wird. Dadurch erhält man eine haptische Rückmeldung bzw. ein Force Feedback bei der händischen Verdrehung der Strahllenkeinheit. Auch kann die Steuer- und Auswerteeinheit die Spulen in einem Regelkreis so regeln, dass ein für die händische Bedienung übliches Drehmoment oder eine typische Verdrehung an der Achse erkannt und dann entweder gesperrt, unterstützt oder erschwert wird. Ein Kriterium für das, ggf. kraftmässig beeinflusste, Zulassen einer Verdrehung wäre die Erkennung der Überschreitung eines Schwellenmomentes.

Das oben beschriebene haptische Verhalten der Positioniereinrichtung kann auch über eine manipulative Veränderung der Lagervorspannung (Be-/Entlastung des Lagers) mittels der beim Betrieb des Axialflussmotors entstehenden und beeinflussbaren magnetischen Axialkraft erzielt werden.

Besitzt die Positioniereinrichtung einen zweiseitigen Aufbau, so kann die axiale Kraft, die prinzipbedingt durch den laufenden Antrieb entsteht, betragsmässig eingestellt werden. So kann gezielt z.B. ein axialkraftfreies Verhalten eingestellt werden, aber auch eine definiert verbleibende Axialkraft, um z.B. ein Lager vorzuspannen.

Die erfindungsgemässe Positioniereinrichtung lässt sich für das Vermessungsgerät weiters derart auslegen, dass bei gross gewähltem Innendurchmesser der Aussendurchmesser immer noch relativ klein bleibt. Dieser Vorteil kann dahin gehend ausgeschöpft werden, dass im Inneren der Positioniereinrichtung ein grösserer Hohlraum zur Nutzung anderer Komponenten berücksichtigt werden kann, ohne dass nach aussen hin das Gehäuse überdimensioniert werden müsste. Auch ist ein entscheidender Vorteil der Erfindung, dass die Positioniereinrichtung bezüglich ihres Ausmasses relativ flexibel, insbesondere sehr schmal dimensioniert werden kann.

Gemäss einer weiteren Ausführungsform ist der Axialflussmotor kombinierbar mit einem Kugelpunktlager. Diese Kombination erweist sich als besonders vorteilhaft, da die quasi als Nebeneffekt auftretende axiale Magnetkraft des Axialflussmotors der Vorspannung eines solchen Kugelpunktlagers zumindest teilweise zuträglich ist. Ein Kugelpunktlager zeichnet sich hierbei dadurch aus, dass mittels einer Kugel ein Rotor relativ zu einem Stator gelagert ist, wobei die drei beteiligten Komponenten zentriert und stabil aneinander ausgerichtet bleiben, indem Rotor und Stator einen speziell geformten, zentrierenden Sitz für die Kugel aufweisen. Dieser Sitz ist eine Kavität, die die Kugel selbstzentrierend und stabil einfasst. Die Kavität kann beispielsweise torisch, kegelförmig, konisch, sphärisch oder asphärisch sein. Die Kugel ist dabei nur soweit in der jeweiligen Kavität versenkt bzw. ragt noch soweit aus der jeweiligen Kavität heraus, dass der Rotor an der Kugel und die Kugel am Stator abgleiten, ohne dass sich Rotor und Stator berühren.

Auch lässt sich ein erfindungsgemässes Vermessungsgerät so gestalten, dass die Positioniereinrichtung für weitere ihrer Achsen verwendet werden kann.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen
- Fig.1:: ein erfindungsgemässes Vermessungsgerät;
- Fig.2:: ein erfindungsgemässes Vermessungsgerät mit der Lagerung und der Positioniereinrichtung im Ausschnitt;
- Fig.3:: ausschnittweise die Lagerung und Positioniereinrichtung eines ersten Ausführungsbeispiels eines erfindungsgemässen Vermessungsgerätes;
- Fig.4:: ausschnittweise die Lagerung und Positioniereinrichtung eines zweiten Ausführungsbeispiels eines erfindungsgemässen Vermessungsgerätes;
- Fig.5a,b,c:: mit Magneten bestückte Rotoren;
- Fig.6a,b:: mit Spulen bestückte Platinen;
- Fig.7:: den Zusammenbau einer erfindungsgemässen Positioniereinheit in der seitlichen Schnittdarstellung;
- Fig.8:: eine erfindungsgemässe Positioniereinheit in der Explosionsansicht.

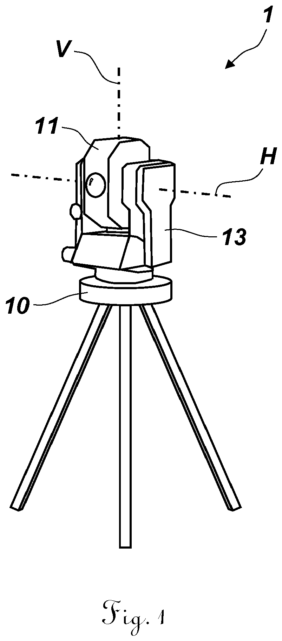

Figur 1 zeigt ein Ausführungsbeispiel des erfindungsgemässen Vermessungsgerätes 1 als Theodoliten. Das Vermessungsgerät weist eine Stehachse V und eine Kippachse H auf. Weiters zeigt die Figur die Strahllenkeinheit 11, die Stütze 13 sowie die Basis 10 des Vermessungsgerätes. Die erfindungsgemässe Positioniereinrichtung ist bevorzugt in der Stütze 13 vorgesehen, kann aber alternativ auch in der Strahllenkeinheit 11 angeordnet sein.

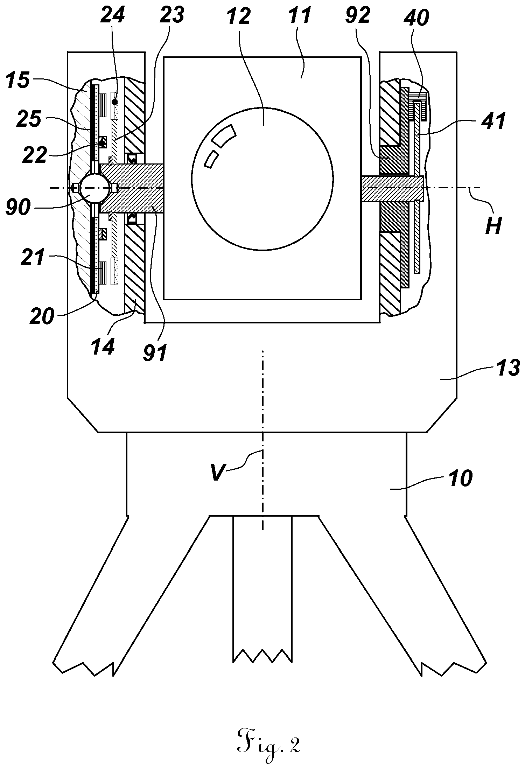

Figur 2 zeigt den Theodoliten in der Vorderansicht, wobei die relevanten Stellen der Lagerung und des Antriebs ausgeschnitten sind. Die Strahllenkeinheit 11 beinhaltet ein Teleskop 12 und eine Entfernungsmesseinrichtung und ist verdrehfest mit der Welle 91 verbunden. Die Welle 91 weist zur Lagerung mittels einer Kugel 90 eine Kegelbohrung auf. Eine weitere Kegelbohrung ist im Deckel 15 der Stütze 13 eingearbeitet, sodass die Welle 91 durch ein Einklemmen der Kugel 90 zwischen den beiden Kegelbohrungen radial und axial in der Stütze gelagert ist. Die dazu benötigte Vorspannung wird im gezeigten Beispiel primär durch die Vorspannmagnete 22 erzielt. Die Axialkräfte, die beim Betrieb des Axialflussmotors (20,21,23,24) entstehen, können zusätzlich auch aktiv zur Beeinflussung der Lagerkräfte bzw. Lagervorspannung benützt werden. So kann beispielsweise die Lagervorspannung also gezielt abgeschwächt oder verstärkt werden. Die Leiterplatte 20 ist mit dem Deckel 15 oder alternativ mit der Stütze 13 fix verbunden. Kranzförmig auf der Leiterplatte 20 sind Spulen 21 angeordnet, die jeweils über elektrische Leiter mit der Leiterplatte 20 verkabelt sind. Die Spulen 21 sind so gewickelt, dass ihre Windungsachse achsparallel zur Kippachse H liegt. Die Vorspannmagnete 22 ziehen die Rotorscheibe 23 auch dann noch an, wenn die Positioniereinrichtung ausser Betrieb ist. Auf der drehfest mit der Welle 91 verbundenen Rotorscheibe 23 sind aussen umfänglich Rotormagnete 24 angeordnet. Diese Rotormagnete 24 können zum Beispiel standardisierte Permanentmagnete sein, aber auch Sonderanfertigungen oder ein homogener remanentmagnetischer Ringkörper, der entsprechend abschnittsweise magnetisiert wurde. Die Magnete sind ebenfalls kranzförmig angeordnet, sodass sie den Spulen axial gegenüberstehen. Die Polung der Rotormagnete 24 ist entlang des Rotorscheibenumfangs abwechselnd "Nord" und "Süd". Die Steuer- und Auswerteeinheit, welche für die Ansteuerung der Spulen 21 zuständig ist, kann z.B. auch in bzw. auf der Leiterplatte 20 integriert sein oder sich an einer anderen Stelle im Vermessungsgerät befinden.

Auf der anderen Seite ist die Welle 91 in einem konventionellem V-Lager 92 gleitgelagert, wobei in diesem Teil der Stütze 13 eine Codescheibe 41 auf der Welle 91 angeordnet ist, die in Kombination mit dem Durchlichtwinkelsensor 40 ein Winkelmesssystem bildet.

Das Vermessungsgerät 1 hat also wenigstens eine optoelektronische Entfernungsmesseinrichtung mit einem Messstrahlgang, eine Basis 10 zur Platzierung des Vermessungsgerätes 1, eine auf der Basis 10 um eine Stehachse V drehbar gelagerte Stütze 13 zur azimuthalen Ausrichtung des optischen Strahlgangs, eine in der Stütze 13 um eine Kippachse H drehbar gelagerte Strahllenkeinheit 11 zur elevativen Ausrichtung des Messstrahlgangs, ein Winkelmesssystem zur Messung der Achsstellungen und einer ansteuerbaren, die Strahllenkeinheit 11 bzw. die Stütze 13 antreibende Positioniereinrichtung, wobei die Positioniereinrichtung mehrere ringförmig um die Kippachse H und/oder Stehachse V und ortsfest angeordnete Spulen 21 mit zur Kippachse H bzw. Stehachse V achsparallelen Windungsachsen aufweist und die Spulen 21 durch Ansteuermittel so ansteuerbar sind, dass sie mit mehreren, auf einer Rotorscheibe 23 umfänglich in abwechselnder Polung benachbarten und axial gegenüber den Spulen 21 angeordneten Rotormagneten 24 in Wechselwirkung treten, um folgende Funktionen zu gewährleisten:
- Ausüben eines Drehmomentes auf die Strahllenkeinheit 11 bzw. die Stütze 13,
- Ermöglichung der freien händischen Beweglichkeit der Strahllenkeinheit 11 bzw. der Stütze 13 und
- Sperren der Beweglichkeit der Strahllenkeinheit 11 bzw. der Stütze 13.

Hierbei bedeutet eine freie händische Beweglichkeit, dass die Beweglichkeit zumindest derart entsperrt ist, dass ein Benutzer mit normaler Muskelkraft eine übliche Verdrehung der Komponente herbeiführen kann. Als Ansteuermittel sind beispielsweise Regelungs-, Steuer-, Auswerteeinheiten oder weitere, die Ansteuerung betreffende elektronische Bauteile zu verstehen.

Die Rotormagnete 24 können durch Standardmagnete, Spezialmagnete oder durch einen einteiligen Remanentmagneten verkörpert werden, der umfänglich abschnittsweise alternierend magnetisiert ist. In einem solchen Remanentmagneten, der aus homogenem Material besteht, sind die Magnete durch Polarisierung bzw. Polung eingearbeitet.

Die Spulen 21 sind auf einer Seite der Leiterplatte 20 angeordnet, insbesondere wobei ein Flussumlenkelement 25 auf der anderen Seite der Leiterplatte 20 angeordnet, insbesondere auflaminiert ist, oder ein Flussumlenkelement 25 und die Leiterplatte 20 Bestandteile einer Verbundplatte sind, wobei die Verbundplatte in einer Kombinierung der Materialien
- Metall und
- Keramik und/oder
- Kunststoff
eine an der Stütze 13 bzw. der Basis 10 fixierte Tragstruktur verkörpert.

Rotor und/oder Stator verfügen über eine achszentrale Öffnung. Als Rotor gilt der drehbare Teil der Positioniereinrichtung und als Stator gilt der ortsfeste Teil der Positioniereinrichtung.

Die Spulen 21 können anstelle von Kupferspulen auch durch auf der Leiterplatte 20 direkt eingebettete Leiterbahnen oder elektrische Leiter direkt auf oder in einem elektrisch nicht leitenden Träger verkörpert werden. Die Leiterplatte 20 nimmt weitere, für von der Positioniereinrichtung verschiedene Zwecke verwendete, elektronische Komponenten, insbesondere andere Leiterbahnen auf.

Das Flussumlenkelement 25 ist gleichmässig planar ausgebildet, so dass zwischen Stator und Rotor keine Rastmomente herrschen, insbesondere wenn die Spulen (21) nicht von elektrischem Strom durchflossen werden.

Die Rotorscheibe 23 drehfest mit einer Welle 91 und die Welle 91 drehfest mit der Strahllenkeinheit 11 bzw. der Stütze 13 verbunden sind.

Mit einer durch gezielte Ansteuerung der Spulen 21 erreichbaren Axialkraft ist die Lagervorspannung der Lagerung der Welle 91 spezifisch beeinflussbar.

Die Rotorscheibe 23 ist axial beidseitig von je einer ortsfesten und ringförmig angeordnete Spulen aufweisenden Einheit umgeben, wobei die Rotormagnete 24 den Spulen 21 gegenüberstehen.

Bei einem Abbremsen der Positioniereinrichtung kann eine Energierückgewinnung stattfindet. Dabei wird die restliche Bewegung der Strahllenkkomponente ausgenutzt, um damit in einem Bremsenergierückgewinnungsmodus die Positioniereinrichtung als Generator bzw. Dynamo betreiben zu können. Dies ist insbesondere für akkubetriebene Vermessungsgeräte von Vorteil.

Zum Ausüben eines Drehmomentes auf die Strahllenkeinheit 11 werden die Spulen 21 über die Ansteuermittel derart angeregt, dass die dabei entstehenden und rotierenden elektro-magnetischen Felder auf die mit Rotormagneten 24 bestückte Rotorscheibe 23 umfängliche Magnetkräfte ausüben.

Zur Ermöglichung der freien händischen Beweglichkeit der Strahllenkeinheit 11 bzw. der Stütze 13 werden die Spulen 21 in einen unangeregten Zustand versetzt, sodass
- die Wechselwirkung zwischen den Rotormagneten 24 und den Spulen 21 aufgehoben wird und somit die Beweglichkeit der Rotorscheibe 23 gegenüber dem Stator frei von Magnetkräften ist oder
- die Spulen 21 derart geregelt angeregt werden, dass bei erkanntem händisch auf die Strahllenkeinheit 11 bzw. auf die Stütze 13 ausgeübtem Drehmoment, insbesondere bei Überschreiten eines Schwellmomentes, eine Verdrehung der Strahllenkeinheit 11 bzw. der Stütze im Sinne einer Rutschkupplung zugelassen wird, wobei anhand der Ansteuerung der Spulen 21 eine gezielte haptische Kraftrückkopplung im Sinne eines Force Feedbacks der Verdrehung entgegen richtbar ist.

Zur Einschränkung der Beweglichkeit der Strahllenkeinheit 11 bzw. der Stütze 13 die Spulen 21 über die Ansteuermittel derart angeregt werden, dass die dabei entstehenden und ortsfesten elektro-magnetischen Felder auf die mit Rotormagneten 24 bestückte Rotorscheibe 23 umfängliche, die Rotation sperrende Magnetkräfte ausüben.

Durch entsprechende konstruktive Massnahmen kann die Positioniereinrichtung auch alternativ in der Strahllenkeinheit 11 angeordnet sein.

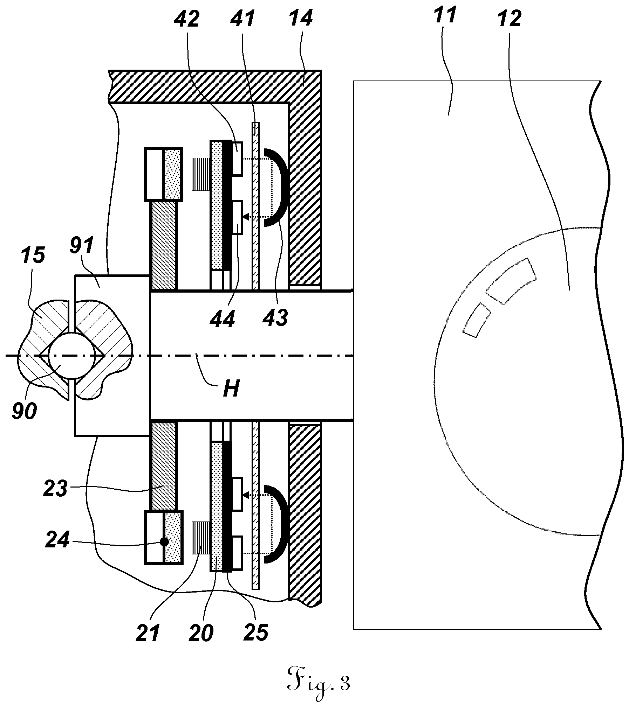

Figur 3 zeigt die vergrösserte Detailansicht eines weiteren Ausführungsbeispiels. Die Rotorscheibe 23 ist drehfest mit der Welle 91 verbunden und weist umfänglich kreisförmig angeordnete Rotormagnete 24 auf. Gegenüberliegend befindet sich eine in der Stütze 13 ortsfest fixierte Leiterplatte 20 mit dem Flussumlenkelement 25 auf der Rückseite. Das Flussumlenkelement 25 Signalsender 42 und Signalencoder 44 auf, die in Kombination mit den Reflektoren 43 und der Codescheibe 41 ein Winkelmesssystem bilden.

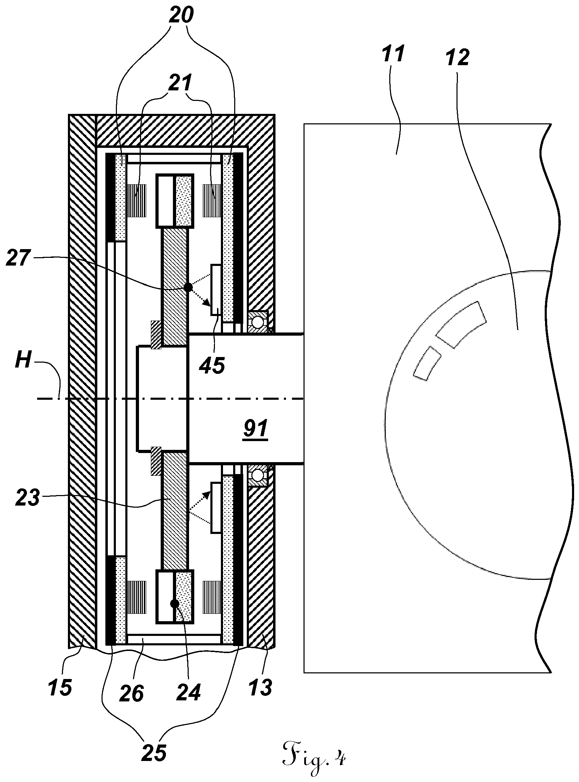

Figur 4 zeigt einen zweiseitigen Aufbau des Axialflussmotors als Positioniereinheit in einem Vermessungsgerät. Durch den zweiseitigen Aufbau lässt sich ein deutlich höheres Drehmoment erzielen. Die mit der Stütze 13 über eine Tragstruktur 26 verbundenen Leiterplatten 20 weisen nach aussen hin Flussumlenkelemente 25 und innen Spulen 21 auf, die ringförmig um die Kippachse H angeordnet sind. Zwischen den Ringen aus Spulen 21 ist die Rotorscheibe 23 mit ihren ebenfalls ringförmig am Umfang angeordneten Rotormagneten 24 platziert. Die Rotorscheibe 23 ist starr mit der Welle 91 verbunden, die die Strahllenkeinheit 11 trägt. Eine radiale Lagerung der Welle 91 in der Stütze 13 kann beispielsweise durch Wälzlager erfolgen. Die axiale Lagerung kann durch das "magnetische Verspannen" des Rotors in der zweiseitigen Axialflussmaschine erfolgen. Ein Winkelmesssystem ist anhand auf die Rotorscheibe 23 aufgebrachter Codemarkierungen 27 realisiert, die von einem auf einer der Leiterplatten 25 angeordneten Reflektionswinkelsensor 45 kontinuierlich abgescannt wird.

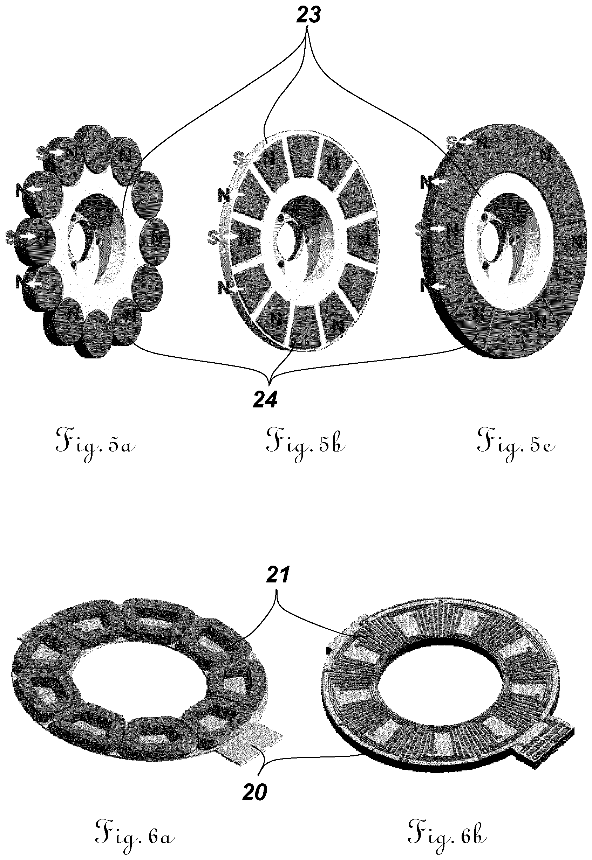

Figur 5a bis 5c zeigen verschiedene Varianten des Rotors, namentlich der mit Rotormagneten 24 ausgestatteten Rotorscheibe 23. Figur 5a zeigt eine Rotorscheibe 23 mit ringförmig darauf angeordneten Standardmagneten 24 mit abwechselnder Polung. Figur 5b zeigt in die Rotorscheibe 23 eingelassene spezialangefertigte Magneten und Figur 5c zeigt einen aus homogenem Material bestehenden, einstückigen Remanentmagneten, dem in einem vorangehenden Fertigungsschritt die magnetische Polung eingearbeitet wurde.

Figur 6a und 6b zeigen Varianten der Spulen 21 am Stator. Figur 6a zeigt ringförmig auf der Leiterplatte 20 angeordnete Spulen 21, erstellt durch die Wicklung von z.B. Kupferdrähten. Die Achse der Spulenwindungen ist parallel zur Rotationsachse (Kippachse, Stehachse) und senkrecht zur Platine 20. In Figur 6b ist eine Leiterplatte 20 mit integrierten Spulen 21 gezeigt. Diese können beispielsweise "aufgeprintet" oder eingegossen sein.

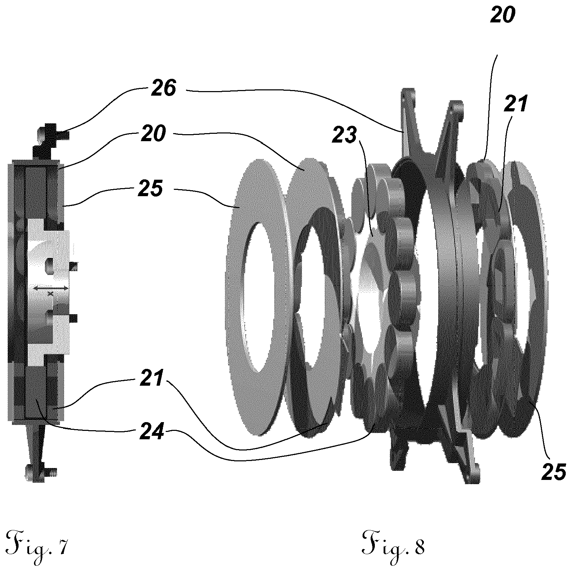

Figur 7 zeigt eine montierte Axialflussmaschine zur Verwendung in einem erfindungsgemässen Messgerät im zweiseitigen Aufbau und Figur 8 die dazugehörige Explosionszeichnung. In einer Tragstruktur 26 werden die Leiterplatten 20 und die Flussumlenkelemente 25 (auch Kurzschlussbleche genannt) montiert. Die Tragstruktur 26 kann alternativ auch durch die Leiterplatte 20 und das Flussumlenkelement 25 als einteiliges Bauteil verwirklicht werden, indem entsprechend unterschiedliche funktionelle Lagen aus Metall, Keramik und/oder Kunststoff miteinander im Verbund stehen, insbesondere laminiert sind. Dieser mehrschichtige Verbund spart nochmals an Baumraum.

Die Leiterplatten 20 tragen die Spulen 21. Die Rotorscheibe 23 mit ihren umfänglich angeordneten Rotormagneten 24 befindet sich zwischen den Spulen-Kränzen und ist dort frei beweglich. An der Innenbohrung oder am Flansch der Rotorscheibe 23 ist die zu positionierende Welle bzw. das anzutreibende Element zu befestigen.

Es versteht sich, dass die vorangehend gezeigten und erklärten Figuren nur mögliche Ausführungsbeispiele schematisch darstellen. Insbesondere wird darauf hingewiesen, dass die explizit dargestellten und erklärten Beispiele ausnahmslos sowohl separat voneinander als auch in jeglicher Kombination miteinander einsetzbar sind.

## Patentansprüche

1. Vermessungsgerät (1) ausgebildet als Totalstation, Tracker oder Theodolit, mit wenigstens
• einer opto-elektronischen Entfernungsmesseinrichtung mit einem Messstrahlgang,
• einer Basis (10) zur Platzierung des Vermessungsgerätes (1),
• einer auf der Basis (10) um eine Stehachse (V) drehbar gelagerten Stütze (13) zur azimuthalen Ausrichtung des optischen Strahlgangs,
• einer in der Stütze (13) um eine Kippachse (H) drehbar gelagerten Strahllenkeinheit (11) zur elevativen Ausrichtung des Messstrahlgangs,
• einem Winkelmesssystem zur Messung der Achsstellungen
• einer ansteuerbaren, die Strahllenkeinheit (11) bzw. die Stütze (13) antreibenden Positioniereinrichtung und
• Ansteuermitteln,
**dadurch gekennzeichnet, dass**
die Positioniereinrichtung mehrere ringförmig um die Kippachse (H) und/oder Stehachse (V) und ortsfest angeordnete Spulen (21) mit zur Kippachse (H) bzw. Stehachse (V) achsparallelen Windungsachsen aufweist und die Spulen (21) durch die Ansteuermittel so angesteuert werden, dass sie mit mehreren, auf einer Rotorscheibe (23) umfänglich in abwechselnder Polung benachbarten und axial gegenüber den Spulen (21) angeordneten Rotormagneten (24) in Wechselwirkung treten, um die folgenden Funktionen zu gewährleisten:
• Ausüben eines Drehmomentes auf die Strahllenkeinheit (11) bzw. die Stütze (13),
• Ermöglichung der freien händischen Beweglichkeit der Strahllenkeinheit (11) bzw. der Stütze (13) und
• Sperren der Beweglichkeit der Strahllenkeinheit (11) bzw. der Stütze (13),
wobei die Spulen (21) auf der einen Seite einer Leiterplatte (20) angeordnet sind und ein Flussumlenkelement (25) auf der anderen Seite der Leiterplatte (20) angeordnet ist, und dabei das Flussumlenkelement (25) gleichmässig planar ausgebildet ist, so dass zwischen Stator und Rotor keine Rastmomente herrschen, insbesondere wenn die Spulen (21) nicht von elektrischem Strom durchflossen werden.

2. Vermessungsgerät (1) nach Anspruch 1,
**dadurch gekennzeichnet, dass**
die Rotormagnete (24) durch einen einteiligen Remanentmagneten verkörpert werden, der umfänglich abschnittsweise alternierend magnetisiert ist.

3. Vermessungsgerät (1) nach einem der vorherigen Ansprüche,
**dadurch gekennzeichnet, dass**
das Flussumlenkelement (25) auf der Leiterplatte (20) auflaminiert ist.

4. Vermessungsgerät (1) nach einem der vorherigen Ansprüche,
**dadurch gekennzeichnet, dass**
Rotor und/oder Stator über eine achszentrale Öffnung verfügen.

5. Vermessungsgerät (1) nach einem der vorherigen Ansprüche,
**dadurch gekennzeichnet, dass**
die Spulen (21) durch auf der Leiterplatte (20) eingebettete Leiterbahnen oder elektrische Leiter auf der Leiterplatte (20) verkörpert werden.

6. Vermessungsgerät (1) nach einem der vorherigen Ansprüche,
**dadurch gekennzeichnet, dass**
die Rotorscheibe (23) drehfest mit einer Welle (91) und die Welle (91) drehfest mit der Strahllenkeinheit (11) bzw. der Stütze (13) verbunden sind.

7. Vermessungsgerät (1) nach Anspruch 6,
**dadurch gekennzeichnet, dass**
mit einer durch gezielte Ansteuerung der Spulen (21) erreichbaren Axialkraft die Lagervorspannung der Lagerung der Welle (91) spezifisch beeinflussbar ist.

8. Vermessungsgerät (1) nach einem der vorherigen Ansprüche,
**dadurch gekennzeichnet, dass**
die Rotorscheibe (23) axial beidseitig von je einer ortsfesten und ringförmig angeordnete Spulen aufweisenden Einheit umgeben ist, insbesondere wobei eine dieser Einheiten die Leiterplatte (20) ist und wobei die Rotormagnete (24) den Spulen (21) gegenüberstehen.

9. Vermessungsgerät (1) nach einem der vorherigen Ansprüche,
**gekennzeichnet durch**
einen Betriebsmodus der Positioniereinrichtung zur Energierückgewinnung bei einem Abbremsen des Rotors.

10. Vermessungsgerät (1) nach einem der vorherigen Ansprüche,
**dadurch gekennzeichnet, dass**
zum Ausüben eines Drehmomentes auf die Welle (91) die Spulen (21) über die Ansteuermittel derart angeregt werden, dass die dabei entstehenden und rotierenden elektro-magnetischen Felder auf die mit Rotormagneten (24) bestückte Rotorscheibe (23) umfängliche Magnetkräfte ausüben.

11. Vermessungsgerät (1) nach einem der vorherigen Ansprüche,
**dadurch gekennzeichnet, dass**
zur Ermöglichung der freien händischen Beweglichkeit der Strahllenkeinheit (11) bzw. der Stütze (13)
• die Spulen (21) in einen unangeregten Zustand versetzt werden, sodass die Wechselwirkung zwischen den Rotormagneten (24) und den Spulen (21) aufgehoben wird und somit die Beweglichkeit der Rotorscheibe (23) gegenüber dem Stator frei von Magnetkräften ist oder
• die Spulen (21) derart geregelt angeregt werden, dass bei erkanntem händisch auf die Strahllenkeinheit (11) bzw. auf die Stütze (13) ausgeübtem Drehmoment,. insbesondere bei Überschreiten eines Schwellmomentes, eine Verdrehung der Strahllenkeinheit (11) bzw. der Stütze (13) im Sinne einer Rutschkupplung zugelassen wird, insbesondere wobei anhand der Ansteuerung der Spulen (21) eine gezielte haptische Kraftrückkopplung im Sinne eines Force Feedbacks der Verdrehung entgegen richtbar ist.

12. Vermessungsgerät (1) nach einem der vorherigen Ansprüche,
**dadurch gekennzeichnet, dass**
zur Einschränkung der Beweglichkeit der Strahllenkeinheit (11) bzw. der Stütze (13) die Spulen (21) über die Ansteuermittel derart angeregt werden, dass die dabei entstehenden und ortsfesten elektro-magnetischen Felder auf die mit Rotormagneten (24) bestückte Rotorscheibe (23) umfängliche, die Rotation sperrende Magnetkräfte ausüben.

13. Vermessungsgerät (1) nach einem der vorherigen Ansprüche,
**dadurch gekennzeichnet, dass**
die Positioniereinrichtung in der Strahllenkeinheit (11), in der Stütze (13) oder in der Basis (10) angeordnet ist. •

## Claims

1. Surveying apparatus (1) embodied as total station, tracker or scanner, comprising at least
• an optoelectronic distance measuring device having a measuring beam path,
• a base (10) for placing the surveying apparatus (1),
• a support (13) which is mounted on the base (10) such that it is rotatable about a vertical axis (V), for azimuthal alignment of the optical beam path,
• a beam directing unit (11) which is mounted in the support (13) such that it is rotatable about a tilting axis (H), for elevation alignment of the measurement beam path,
• an angle measurement system for measuring the axial positions,
• an actuatable positioning device driving the beam directing unit (11) or the support (13), and
• actuating means,
**characterized in that**
the positioning device has a plurality of coils (21) which are arranged in a positionally fixed manner in the form of a ring about the tilting axis (H) and/or vertical axis (V), with winding axes which are axially parallel to the tilting axis (H) or vertical axis (V), and the coils (21) are actuated by the actuating means such that they interact with a plurality of rotor magnets (24) which are adjacent circumferentially on a rotor disc (23) with alternating poles and are arranged axially with respect to the coils (21) in order to ensure the following functions:
• exerting torque on the beam directing unit (11) or the support (13),
• allowing the free-hand maneuverability of the beam directing unit (11) or the support (13), and
• blocking the maneuverability of the beam directing unit (11) or the support (13)
wherein the coils (21) are arranged on one side of a circuit board (20) and a flow deflection element (25) is arranged on the other side of the circuit board (20), and wherein the flow deflection element (25) is configured in a uniformly planar fashion such that no cogging torques exist between stator and rotor, in particular when no electric current flows through the coils (21).

2. Surveying apparatus (1) according to Claim 1,
**characterized in that**
the rotor magnets (24) are embodied by a unipartite remanent magnet which is magnetized circumferentially in sectionally alternating fashion.

3. Surveying apparatus (1) according to any one of the preceding claims,
**characterized in that**
the flow deflection element (25) is laminated onto the circuit board (20).

4. Surveying apparatus (1) according to any one of the preceding claims,
**characterized in that**
rotor and/or stator have an axially central opening.

5. Surveying apparatus (1) according to any one of the preceding claims,
**characterized in that**
the coils (21) are embodied by conductor tracks which are embedded on the circuit board (20) or by electrical conductors on the circuit board (20).

6. Surveying apparatus (1) according to any one of the preceding claims,
**characterized in that**
the rotor disc (23) is connected in a rotationally fixed manner to a shaft (91), and the shaft (91) is connected in a rotationally fixed manner to the beam directing unit (11) or the support (13).

7. Surveying apparatus (1) according to Claim 6,
**characterized in that**,
using an axial force which is achievable by way of selective actuation of the coils (21), the bearing preloading of the bearing of the shaft (91) is specifically influenceable.

8. Surveying apparatus (1) according to any one of the preceding claims,
**characterized in that**
the rotor disc (23) is surrounded axially on both sides by in each case a positionally fixed unit and a unit having coils that are arranged in the form of a ring, in particular wherein one of these units is the circuit board (20) and wherein the rotor magnets (24) are situated opposite the coils (21).

9. Surveying apparatus (1) according to any one of the preceding claims,
**characterized by**
an operating mode of the positioning device for energy regeneration during braking of the rotor.

10. Surveying apparatus (1) according to any one of the preceding claims,
**characterized in that**
to exert torque onto the shaft (91), the coils (21) are excited via the actuation means such that the resulting rotating electromagnetic fields exert circumferential magnetic forces onto the rotor disc (23) that is provided with rotor magnets (24).

11. Surveying apparatus (1) according to any one of the preceding claims,
**characterized in that**
to allow the free-hand maneuverability of the beam directing unit (11) or the support (13),
• the coils (21) are changed into a non-excited state such that the interaction between the rotor magnets (24) and the coils (21) is canceled and thus the maneuverability of the rotor disc (23) with respect to the stator is free from magnetic forces, or
• the coils (21) are excited in a regulated fashion such that, when torque is detected to be exerted by hand onto the beam directing unit (11) or onto the support (13), in particular if a threshold moment is exceeded, twisting of the beam directing unit (11) or of the support (13) in the sense of a slide coupling is permitted, in particular wherein targeted haptic force feedback is directable counter to the twisting by way of the actuation of the coils (21).

12. Surveying apparatus (1) according to any one of the preceding claims,
**characterized in that**
to restrict the maneuverability of the beam directing unit (11) or of the support (13), the coils (21) are excited via the actuation means such that the resulting positionally fixed electromagnetic fields exert onto the rotor disc (23), which is equipped with rotor magnets (24), circumferential magnetic forces that block the rotation.

13. Surveying apparatus (1) according to any one of the preceding claims,
**characterized in that**
the positioning device is arranged in the beam directing unit (11), in the support (13) or in the base (10) .

## Revendications

1. Appareil de mesure (1) configuré comme une station totale, un suiveur ou un théodolite, avec au moins
• un dispositif optoélectronique de mesure de la distance avec une trajectoire du faisceau de mesure,
• une base (10) pour le placement de l'appareil de mesure (1),
• un support (13) positionné rotatif autour d'un axe vertical (V) sur la base (10) pour l'orientation azimutale de la trajectoire du faisceau optique,
• une unité de direction des faisceaux (11) positionnée rotative autour d'un axe de basculement (H) dans le support (13) pour l'orientation en élévation de la trajectoire du faisceau de mesure,
• un système de mesure d'angle pour la mesure des positions d'axe,
• un dispositif de positionnement pouvant être commandé, qui entraîne l'unité de direction des faisceaux (11) ou le support (13), et
• des moyens de commande
**caractérisé en ce que** le dispositif de positionnement présente plusieurs bobines (21) placées en forme d'anneau autour de l'axe de basculement (H) et/ou de l'axe vertical (V) et de manière stationnaire avec des axes d'enroulement d'axe parallèle avec l'axe de basculement (H) ou l'axe vertical (V) et les bobines (21) sont commandées par les moyens de commande de telle manière qu'elles entrent en interaction avec plusieurs aimants de rotor (24) placés sur un disque de rotor (23), adjacents sur la périphérie à polarité alternée et axialement par rapport aux bobines (21), pour garantir les fonctions suivantes :
• exercer un couple de rotation sur l'unité de direction des faisceaux (11) ou le support (13),
• rendre possible la mobilité libre manuelle de l'unité de direction des faisceaux (11) ou du support (13) et
• blocage de la mobilité de l'unité de direction des faisceaux (11) ou du support (13),
cependant que les bobines (21) sont placées sur l'un des côtés d'une carte imprimée (20) et qu'un élément de déviation du flux (25) est placé sur l'autre côté de la carte imprimée (20) et que l'élément de déviation du flux (25) est configuré uniformément plan si bien qu'il n'intervient pas de couples de crantage entre le stator et le rotor, en particulier lorsque les bobines (21) ne sont pas traversées par un courant électrique.

2. Appareil de mesure (1) selon la revendication 1, **caractérisé en ce que** les aimants de rotor (24) sont constitués par un aimant rémanent en une pièce qui est magnétisé partiellement en alternance sur la périphérie.

3. Appareil de mesure (1) selon l'une des revendications précédentes, **caractérisé en ce que** l'élément de déviation du flux (25) est laminé sur la carte imprimée (20).

4. Appareil de mesure (1) selon l'une des revendications précédentes, **caractérisé en ce que** le rotor et/ou le stator dispose d'une ouverture centrée par rapport à l'axe.

5. Appareil de mesure (1) selon l'une des revendications précédentes, **caractérisé en ce que** les bobines (21) sont constituées par des pistes conductrices noyées sur la carte imprimée (20) ou des conducteurs électriques sur la carte imprimée (20).

6. Appareil de mesure (1) selon l'une des revendications précédentes, **caractérisé en ce que** le disque de rotor (23) est relié fixe en rotation à un arbre (91) et l'arbre (91) est relié fixe en rotation à l'unité de direction des faisceaux (11) ou au support (13).

7. Appareil de mesure (1) selon la revendication 6, **caractérisé en ce que** la précontrainte de palier du positionnement de l'arbre (91) peut être influencée de manière spécifique avec une force axiale qui peut être atteinte par une commande ciblée des bobines (21).

8. Appareil de mesure (1) selon l'une des revendications précédentes, **caractérisé en ce que** le disque de rotor (23) est entouré axialement sur chacun des deux côtés par une unité qui présente des bobines stationnaires et placées en forme d'anneau, en particulier cependant que l'une de ces unités est la carte imprimée (20) et cependant que les aimants du rotor (24) sont opposés aux bobines (21).

9. Appareil de mesure (1) selon l'une des revendications précédentes, **caractérisé par** un mode de fonctionnement du dispositif de positionnement pour la récupération d'énergie lors d'un freinage du rotor.

10. Appareil de mesure (1) selon l'une des revendications précédentes, **caractérisé en ce que**, pour exercer un couple de rotation sur l'arbre (91), les bobines (21) sont commandées par les moyens de commande de telle manière que les champs électromagnétiques qui en résultent et qui sont rotatifs exercent des forces magnétiques périphériques sur le disque de rotor (23) équipé d'aimants de rotor (24).

11. Appareil de mesure (1) selon l'une des revendications précédentes, **caractérisé en ce que**, pour rendre possible la mobilité manuelle libre de l'unité de direction des faisceaux (11) ou du support (13),
• les bobines (21) sont mises dans un état non excité si bien que l'interaction entre les aimants du rotor (24) et les bobines (21) est supprimée et la mobilité du disque du rotor (23) par rapport au stator est ainsi libre de forces magnétiques ou
• les bobines (21) sont commandées de manière réglée de telle manière que, lorsqu'un couple de rotation exercé manuellement sur l'unité de direction des faisceaux (11) ou le support (13) est reconnu, en particulier lorsqu'un couple seuil est dépassé, une torsion de l'unité de direction des faisceaux (11) ou du support (13) est admise dans le sens d'un accouplement à glissement, en particulier cependant qu'un retour de force haptique ciblé peut être dirigé dans le sens d'un retour de force à l'encontre de la torsion à l'aide de la commande des bobines (21).

12. Appareil de mesure (1) selon l'une des revendications précédentes, **caractérisé en ce que**, pour limiter la mobilité de l'unité de direction des faisceaux (11) ou du support (13), les bobines (21) sont commandées par les moyens de commande de telle manière que les champs électromagnétiques ainsi engendrés et stationnaires exercent des forces magnétiques périphériques sur le disque de rotor (23) équipé d'aimants de rotor (24) qui bloquent la rotation.

13. Appareil de mesure (1) selon l'une des revendications précédentes, **caractérisé en ce que** le dispositif de positionnement est placé dans l'unité de direction des faisceaux (11), dans le support (13) ou dans la base (10).
